(19) **Europäisches Patentamt**

**European Patent Office**

**Office européen des brevets**

(11) **EP 0 687 652 B1**

(12) **EUROPEAN PATENT SPECIFICATION**

(45) Date of publication and mention
of the grant of the patent:
**10.04.2002   Bulletin 2002/15**

(51) Int Cl.$^7$: **C02F 1/469**

(21) Application number: **95304050.8**

(22) Date of filing: **13.06.1995**

(54) **A method for treating waste water containing neutral salts comprising monovalent ions**

Verfahren zum Behandeln von Abwasser, das neutrale Salze, umfassend einwertige Ionen, enthält

Procédé pour le traitement des eaux usées contenant des sels neutres comprenant des ions monovalents

(84) Designated Contracting States:
**DE FR GB**

(30) Priority:  **17.06.1994  JP  13532094**

(43) Date of publication of application:
**20.12.1995   Bulletin 1995/51**

(73) Proprietors:
• **Hitachi, Ltd.**
  **Chiyoda-ku, Tokyo 101 (JP)**
• **Global Nuclear Fuel-Japan Co., Ltd.**
  **Tokyo 104 (JP)**

(72) Inventors:
• **Hirose, Yasuo**
  **Hitachi-shi, Ibaraki 316 (JP)**
• **Ishii, Yoshinori**
  **Yokosuka-shi, Kanagawa 239 (JP)**

(74) Representative: **Paget, Hugh Charles Edward et al**
**MEWBURN ELLIS**
**York House**
**23 Kingsway**
**London WC2B 6HP (GB)**

(56) References cited:
**DE-A- 4 317 299          US-A- 2 860 095**
**US-A- 3 933 610**

**Description**

Background of the Invention

(1) Field of the Invention:

The present invention relates to a method of treating waste water containing neutral salts comprising monovalent ions, especially, the method for treating waste water containing neutral salts comprising monovalent ions wherein the monovalent ions being contained in industrial waste water are recycled by being separated and recovered as the acids and bases which compose the neutral salts, and concurrently, the neutral salts are eliminated from the treated waste water which is released to the environment.

(2) Description of the Prior Art:

Liquid effluent containing acids, bases, and their neutral salts is generated often from industrial processes using the acids, the bases, or both of them. As a method for treating industrial liquid effluent, a method wherein a volume of the liquid effluent is reduced by evaporation and the condensed water is discharged is generally used. However, currently, membrane separating techniques such as reverse osmosis, ultrafiltration, electrodialysis, and electrolytic dialysis are being developed.

In JP-A-60-24439 (1985), a method for treating radioactive liquid waste containing nitrate salts is disclosed, wherein low level radioactive liquid waste containing nitrate salts is supplied to a central compartment of an electrolytic cell comprising three compartments separated by separators, the one is a cation exchange membrane made of fluorocarbonpolymer and the other is an anion exchange membrane, and subsequently, the nitrate salts are decomposed by electrolytic dialysis so as to generate nitric acid in an anodic compartment, and alkali hydroxide or ammonium hydroxide in a cathodic compartment, and to concentrate radioactive materials in the central compartment.

An example of flow sheets for performing the above method disclosed in JP-A-60-24439 (1985) is indicated in FIG. 3. Referring to FIG. 3, the numeral 1 indicates the anodic compartment, 2 is the cathodic compartment, 3 is the central compartment, 4 is an anolyte tank, 5 is a catholyte tank, 11 is the anion exchange membrane, and 12 is the cation exchange membrane.

In the electrolytic dialysis cell using for the method disclosed in JP-A-60-24439 (1985), an ion exchange membrane made of fluorocarbonpolymer is used as the cation exchange membrane 12 dividing the central compartment 3 and the cathodic compartment 2.

The ion exchange membrane is well known to have superior durability in alkaline aqueous solution. On the other hand, as for the anion exchange membrane 11 dividing the central compartment 3 and the anodic compartment 1, so-called a strongly basic anion exchange membrane or a weakly basic ion exchange membrane is used. In accordance with proceeding of electrolytic dialysis, concentration of the nitrate salts in the stream in the central compartment decreases, and on the contrary, very slightly existing ions of radioactive elements which are scarcely permeable through the cation exchange membrane such as uranium, plutonium, Am-241, Ce-144, Ru-106, Nb-95, Zr-95, and the like are concentrated.

The method disclosed in JP-A-60-24439 (1985) comprising the steps of decomposing nitrate salts in low level radioactive liquid waste by the electrolytic dialysis using ion exchange membranes, concentrating radioactivity in the liquid waste, and treating the concentrated radioactive liquid waste at a processing facility for a medium or high level radioactive liquid waste, is regarded as an industrial usable method which enables recovered nitric acid and hydroxides be recycled. In accordance with the embodiment 1, for example, of the method disclosed in JP-A-60-24439 (1985), sodium nitrate concentration in the treated liquid waste decreases to 2.0 mole/liter from 2.4 mole/liter of the untreated liquid waste. However, the concentration of the salts in the treated liquid waste desirably be decreased more as possible.

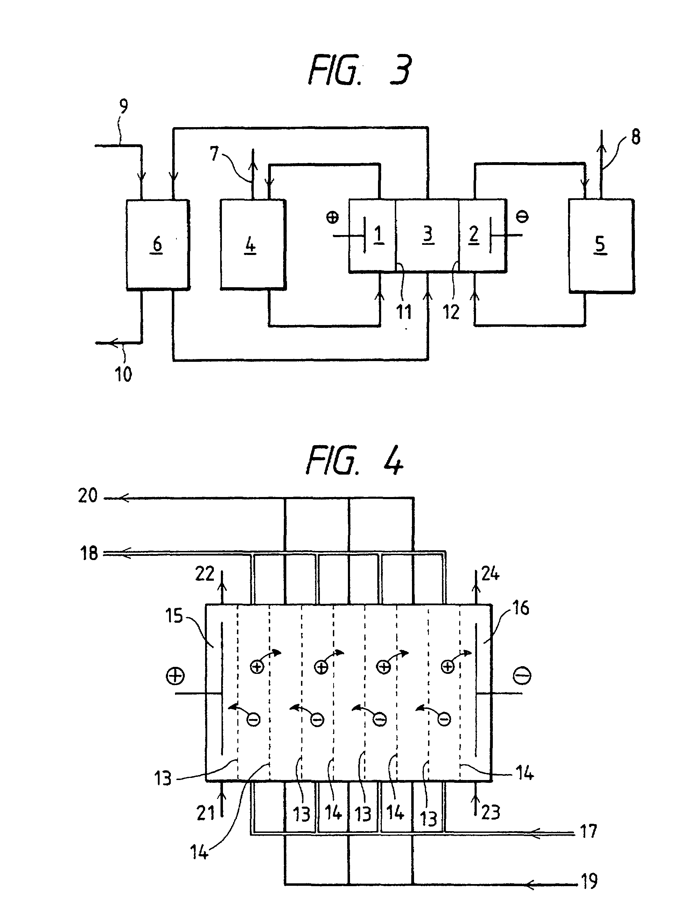

As FIG. 4 referred from Derek Pletcher and Frank C. Walsh: p. 358, FIG. 7.14, Industrial Electrochemistry, 2nd Edition, indicates, the electrodialysis cell is an electrolytic cell composed of units comprising a diluted stream compartment and a concentrated stream compartment separated by the cation exchange membrane and the anion exchange membrane, and the cell is used for transferring and condensing the salts from diluted stream, i.e. supplied stream, to concentrated stream, and concurrently, desalting the diluted stream. In FIG. 4, the numeral 13 indicates cation exchange membrane, 14 is the anion exchange membrane, 15 is the anodic compartment, 16 is the cathodic compartment, 17 is an entry for the diluted stream, 18 is an exit for the diluted stream, 19 is an entry for the concentrated stream, 20 is an exit for the concentrated stream, 21 is an entry for the anolyte, 22 is an exit for the anolyte, 23 is an entry for the catholyte, and 24 is an exit for the catholyte. The anion in the diluted stream permeates through the anion exchange membrane 14 along with positive potential gradient and is transferred into the concentrated stream, the cation in the diluted stream permeates through the cation exchange membrane 13 along with negative potential gradient and is transferred into the concentrated stream, and the anion and the cation are neutralized to form a salt. Water is electrolyzed to generate oxygen and the anolyte becomes acidic in the anodic compartment 15, and water is electrolyzed to generate hydrogen and the catholyte becomes basic in the cathodic compartment 16. The above explained electrodialysis cell is industrially used for desalting from water containing salt to obtain fresh water, or for recovering the salt.

Sometimes, various divalent or higher valent ions exist as impurities in common industrial liquid effluent containing salts of monovalent ions. If the divalent or higher valent ions are cations, the ions permeate the cation exchange membrane 13, and if the ions are anions, the ions permeate the anion exchange membrane 14. The alkali metal ions and the ammonium ion are generally stable under the chemical conditions pertinent to liquid effluents, and above mentioned ions always produce water soluble compounds. However, almost all hydroxides of divalent and higher valent cations are insoluble in water except the cases wherein divalent ions such as Mn, Ni, Co, Zn, Cd, Cu, and the like form complexes to be dissolved in an aqueous ammonia solution. Therefore, when the divalent or higher valent cations permeate the cation exchange membrane and enter into basic catholyte, the cations precipitate and operation of the electrolytic dialysis cell becomes difficult. Even if ammonium hydroxide used as a base in the catholyte so as to generate water soluble hydroxides, the impurities are contained in recovered ammonium hydroxide, and such a problem as restricted use of the recovered ammonium hydroxide is caused. Some divalent and higher valent cations easily deposit as metals onto the cathode, and make operation of the electrolytic dialysis cell difficult. On the other hand, as for divalent and higher valent anions, anions of such elements containing oxygen as As, Sn, Ge, V, Mo, W, Se, Te, and the like exist. However, carbonic acid, boric acid, and phosphoric acid are actually probable anions existing in industrial liquid effluent containing salts of monovalent ions. If the above anions permeate through the anion exchange membrane and enter into the anolyte, the anions are contained in recovered acid of the monovalent ion, and such a problem as restricted use of the recovered acid is caused.

Further, when eliminating neutral salts of monovalent ions in the liquid effluent to extremely low concentration, consuming electric current for eliminating parasitic ions, which are not necessarily to be eliminated, lowers electric current efficiency.

Summary of the Invention

Object of the present invention is to provide a method for eliminating salts in waste water and for recovering acid and base without coexisting impurities, which has not been achieved by the prior art relating to the electrolytic dialysis of liquid effluent containing salts of monovalent ions, and problems to be solved are as follows;

    1. Eliminating salt of monovalent ions in waste water to a low concentration.
    2. Eliminating impurities other than monovalent ions in recovered acid and recovered base.
    3. Increasing concentrations of the recovered acid and the recovered base as high as possible.
    4. Decreasing consuming electric power necessary for processing waste water and recovering acid and base.

The method of the present invention is set out in claim 1.
In the following description, the expression "prepositive" refers to the precursor or preliminary cell.
In one embodiment of the invention, waste water to be processed is supplied first not directly to an electrolytic dialysis cell, but to a diluted stream compartment in a prepositive electrodialysis cell. Concentrated stream in the prepositive electrodialysis cell containing salts generated by neutralization of ions permeated through a pair of ion exchange membranes is supplied to an electrolytic dialysis cell, which is composed of units, each of the units comprises three compartments, i.e. an anodic compartment, a central compartment, and a cathodic compartment, which are separated by a cation exchange membrane and an anion exchange membrane respectively, for decomposing the salts to correspondent acids and bases, and the acids and the bases are recovered.
Diluted stream in the prepositive electrodialysis cell is supplied to a main electrodialysis cell in a subsequent step in order to eliminate residual salts until achieving a final target concentration.
An ion exchange membrane which permeates only monovalent ions selectively and preferentially (ions other than the monovalent ions hardly permeate the membrane) may be used in the present invention. In accordance with selecting the ion exchange membrane which permeates only monovalent ions selectively and preferentially as for the ion exchange membrane composing the prepositive electrodialysis cell, concentration of ions other than the monovalent ions in stream supplied to the electrolytic dialysis cell decreases relatively, and accordingly, it becomes possible to make cations other than the monovalent ions hardly be contained in the basic catholyte of the electrolytic dialysis cell, and to make anions other than the monovalent ions hardly be contained in the acidic anolyte.
Concentration of the salts of the monovalent ions in diluted stream coming out from the prepositive electrodialysis cell is lower than that in the waste water to be treated. However, relative concentration of ions other than the monovalent ions to the concentration of the monovalent ions is higher than that in the waste water to be treated. The diluted stream is supplied orderly to the diluted stream compartment of the main electrodialysis cell at a rear stage of plural main electrodialysis cells which are combined in series so as to make the ions be eliminated to a final target concentration. If ions to be eliminated in view of environmental requirement are only monovalent ions, a cation exchange membrane, an anion exchange membrane, or both of the membranes which permeate only monovalent ions selectively and preferentially are used. If all ions irrelevant to valency must be eliminated in view of environmental requirement, an ion exchange membrane which permeates all of cations and anions effectively is used.

As an ion exchange membrane for decreasing concentration of ions other than monovalent ions in catholyte or anolyte in the electrolytic dialysis cell, the membrane which permeates only the monovalent ions selectively and preferentially can also be used.

Treated waste water, in which concentration of the monovalent ions has been decreased, releasing from the central compartment of the electrolytic dialysis cell can be mixed with waste water to be treated and can be supplied again to the prepositive electrodialysis cell because the stream has lower concentration of ions except the monovalent ions than that of the waste water to be treated.

The concentrated stream in the main electrodialysis cell at rear steps has a higher concentration of ions except monovalent ions to the concentration of the monovalent ions than that of waste water to be treated depending on situation. Therefore, it is not preferable to mix the concentrated stream with waste water to be treated without any processing and supply to the diluted stream compartment of the prepositive electrodialysis cell.

In the main electrodialysis cell, a quantity of ions transferred from the diluted stream compartment to the concentrated stream compartment is proportional to a product of a quantity of electricity transmitted through a pair of ion exchange membrane and the number of the membrane pairs. The quantity of electricity is mainly controlled by a specific electric conductance of the diluted stream under a given load voltage to the electrolytic cell, and the specific electric conductance decreases approximately in proportion to decrease in concentration of the salts in the diluted stream. On the other hand, it is well known that a back diffusion phenomenon becomes remarkable when a concentration ratio of the diluted stream to the concentrated stream, that is a concentration gradient, increases, and especially, an efficiency of electric current decreases when an electric current density at surface of the ion exchange membrane decreases.

In the main electrodialysis cell for ion eliminating process at a rear stage, the ratio of the diluted stream concentration to the concentrated stream concentration (concentration gradient) becomes very large when it is necessary to decrease significantly high ion concentration to significantly low concentration by a so-called batch process wherein the treated stream in a diluted stream circulating tank is circulated between the tank and the electrodialysis cell until the ion concentration in the treated stream reaches a designated concentration. Moreover, a specific electric conductivity of the diluted stream decreases remarkably in accordance with decrease of the ion concentration. In an industrial application of the electrodialysis cell, it is preferable to restrict a chargeable voltage to, for instance, approximately 50 volts in view of safety. Accordingly, when the specific electric conductivity decreases, the quantity of electric current (current density) cannot help decreasing.

In accordance with the present invention, a treating process of the waste water for reducing finally the ion concentration to a designated low value was achieved by providing a method wherein the ion concentration was decreased not by the batch process in restricted stage of the electrodialysis cells but by a process using all stages of a series of combined electrodialysis cells with a similar ratio at each of the stages.

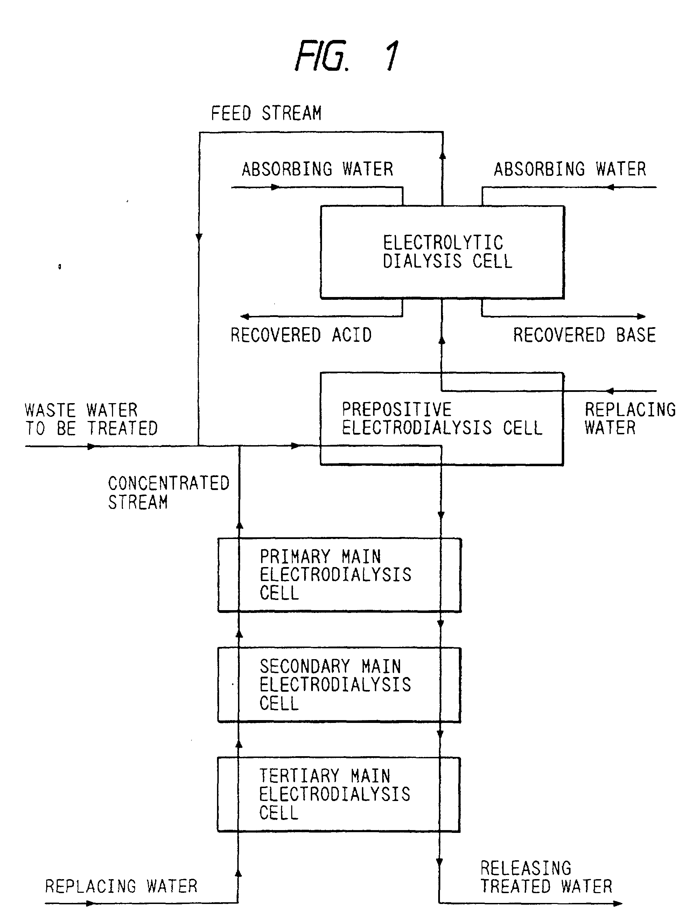

A composition according to the present invention as a means for solving the problems is shown in FIG. 1.

Typical feature in the composition of the present invention in comparison with the prior art which has only electrodialysis cells is that the composition of the present invention is provided with the recovery block comprising a combination of an electrolytic dialysis cell and a half of prepositive electrodialysis cell, and the treatment block comprising a half of prepositive electrodialysis cell and a succession of plural main electrodialysis cells combined in series (for instance 3 stages).

The waste water to be treated is supplied to the prepositive electrodialysis cell provided at an interconnecting location between the above recovery block and the treatment block. In the prepositive electrodialysis cell and each of the main electrodialysis cells combined in series to the prepositive electrodialysis cell, concentration of the salts preferably decreases at a constant ratio. For instance, when the final salt concentration in the waste water to be treated must be decreased to 1/256 by a combination of prepositive electrodialysis cell and successively combined three main electrodialysis cells in series, reducing the salt concentration to 1/4 at each of the stages may achieve the object value. If the final salt concentration must be reduced to 1/1296, reducing to 1/6 at each of the stages may achieve the object, and if the final object concentration is 1/4096, reducing to 1/8 of the salt concentration at each stages is necessary. If the number of the main electrodialysis cells combined in series increases to four, reducing to 1/4.2 at each of the stages is sufficient in order to reduce the salt concentration in the waste water to be treated finally to 1/1296.

A relationship between the loading electric potential to the main electrodialysis cell and the current through the electrodialysis cell under a condition wherein the concentrated stream is commonly used as an anolyte and as a catholyte can be expressed by the following equation;

$$E_{cell} = NI (R_{ca} + R_{an}) + NIR_{di} + (N + I)IR_{co} \qquad (Eq.1)$$

where,

$E_{cell}$ : loading electric potential (Volts)
N : the number of ion exchange membrane pairs
I : electric current (Ampere)
$R_{ca}$ : electric resistivity of anion exchange membrane (ohm)
$R_{an}$ : electric resistivity of cation exchange membrane (ohm)
$R_{di}$ : electric resistivity of diluted stream (ohm)
$R_{co}$ : electric resistivity of concentrated stream (ohm)

If the loading electric potential over the electrodialysis cell is restricted to a constant value, the quantity of electricity available to the electrodialysis cell is most significantly controlled by the electric resistivity of the diluted stream. As specific electric resistivity of the diluted stream is approximately proportional to the salt concentration in the diluted stream, the quantity of electricity is approximately proportional to the salt concentration in the diluted stream.

Accordingly, a substantial part of consumed electric power in the main electrodialysis cell contributes to generate heat in the diluted stream compartment, and it is necessary to cool and remove the heat from circulating stream in the electrodialysis cell because the concentrated stream is also heated through the ion exchange membrane. The specific electric resistivity of the electrolyte aqueous solution decreases about 3 % by temperature elevation of 1 °C, and the specific electric resistivity of the ion exchange membrane has the same characteristics. Therefore, effective operation of the electrodialysis cell can be achieved by properly controlling temperature of the diluted stream.

Molar quantity of the salts transferred from the diluted stream which flows through the electrodialysis cell with a constant flow rate to the concentrated stream is proportional to the salt concentration in the diluted stream at a constant potential. Accordingly, the number of necessary ion exchange membranes at each of the stages of the series of electrodialysis (the number of set of the diluted stream compartment and the concentrated stream compartment) is approximately same even if the molar quantity of salt to be transferred varies significantly.

On the other hand, the concentrated stream in the main electrodialysis cells combined in series flows countercurrently to the diluted stream, and the concentrated stream accumulates salt which is transferred from the diluted stream. When the quantity of the concentrated stream is less than the quantity of the diluted stream by the same ratio as concentration decreasing ratio of the diluted stream in the prepositive electrodialysis cell, the final concentration of the concentrated stream becomes approximately equal to initial concentration in the waste water to be treated, and the concentrated stream is preferable for being used in the process by recycling. In the above case, a ratio of salt concentration in the diluted stream and the concentrated stream in the main electrodialysis cell finally equals to approximately a square of decreasing rate of salt concentration in the diluted stream.

The concentrated stream contacting to the anode in the prepositive electrodialysis cell and the main electrodialysis cell becomes acidic, and the concentrated stream contacting to the cathode becomes basic. Therefore, in conventional desalination of sea water, anolyte is kept acidic by adding acid in order to prevent generating precipitate of magnesium hydroxide in the anolyte. In the present invention, the concentrated stream circulates commonly through all anode compartments and cathode compartments including the concentrated stream compartment of the prepositive electrodialysis cell and each of the main electrodialysis cell respectively. However, in order to prevent the catholyte being too much basic, the concentrated stream which becomes acidic in the anode compartment is supplied to the cathode compartment and is circulated.

Replacing water supplied to the concentrated stream at the last stage of the series of main electrodialysis cells which are combined in series and replacing water supplied to the concentrated stream in the prepositive electrodialysis cell are preferably pure water in order to prevent contaminating the concentrated stream with impurities.

A ratio of the salt concentration in waste water to be treated to the salt concentration in the diluted stream in the prepositive electrodialysis cell is preferably equal to the ratio in the main electrodialysis cell. Therefore, a ratio of the salt concentration in the concentrated stream to the salt concentration in the diluted stream equals to n(n-1) by making the ratio of the flow rate of the diluted stream to the flow rate of the concentrated stream equal to the ratio (n) of the salt concentration in the feed water to be treated to the salt concentration in the diluted stream, and the ratio of the salt concentration in the concentrated stream to the salt concentration in the feed water to be treated equals to (n-1).

The electrolytic dialysis cell comprises plural pairs of an anode compartment having an anion exchange membrane as a separating membrane, a cathode compartment having a cation exchange membrane as a separating membrane, and a central compartment having an anion exchange membrane and a cation exchange membrane as separating membranes, all of which are arranged alternatively. The concentrated stream from the prepositive electrodialysis cell is supplied to the central compartments as a common feed stream, and concurrently, an equal quantity of stream to the difference between the quantity of supplied stream and the quantity of stream permeating through the ion exchange membranes flows out from the central compartments.

The acid is generated in the anolyte which circulates to the anode compartment, and the base is generated in the catholyte which circulates to the cathode compartment. Concentration of the acid and the base depends on a sum of the quantity of the absorbing stream supplied to the anolyte and the catholyte and the quantity of stream permeating through the respective type of ion exchange membranes. In accordance with the present invention, the acid and the base can be recovered relatively easily with a high concentration because salt concentration in feeding stream to the electrolytic dialysis cell is several times as high as in the salt concentration in the waste water to be treated. However, an upper limit of the salt concentration is generally restricted by chemical resistance to acid or to base of the respective ion exchange membrane. Although the acid and the base recovered by the present invention are featured in having simultaneously high concentration and high purity, the acid and the base can be concentrated and purified easily by a conventional method if their usage requires.

The circulating stream in the central compartment of the electrolytic dialysis cell has preferably the same salt concentration as the salt concentration in the waste water to be treated because the excess circulating stream returns to the stream which is to be fed to the prepositive electrodialysis cell for re-treating.

The ion exchange membranes used in the present invention preferably have a selective transport number of at least 0.98 for either of total cations or total anions. Further, the ion exchange membranes for transporting monovalent ions selectively in the present invention preferably has a selective transport number of at most 1/2 for ions other than the monovalent ions.

Brief Description of the Drawings

FIG. 1 is a schematic flow sheet for indicating a concept of the present invention,
FIG. 2 is a schematic drawing indicating a concrete composition of an apparatus shown in FIG. 1 for treating waste water containing neutral salts comprising monovalent ions, which is a preferable embodiment of the present invention,
FIG. 3 is a schematic flow sheet indicating a composition of conventional treating apparatus,
FIG. 4 is a schematic drawing indicating a concrete composition of the conventional treating apparatus, and
FIG. 5 is a schematic flow sheet for explaining treatment of waste water containing neutral salts comprising monovalent ions by a combination of conventional methods.

Detailed Description of the Embodiments

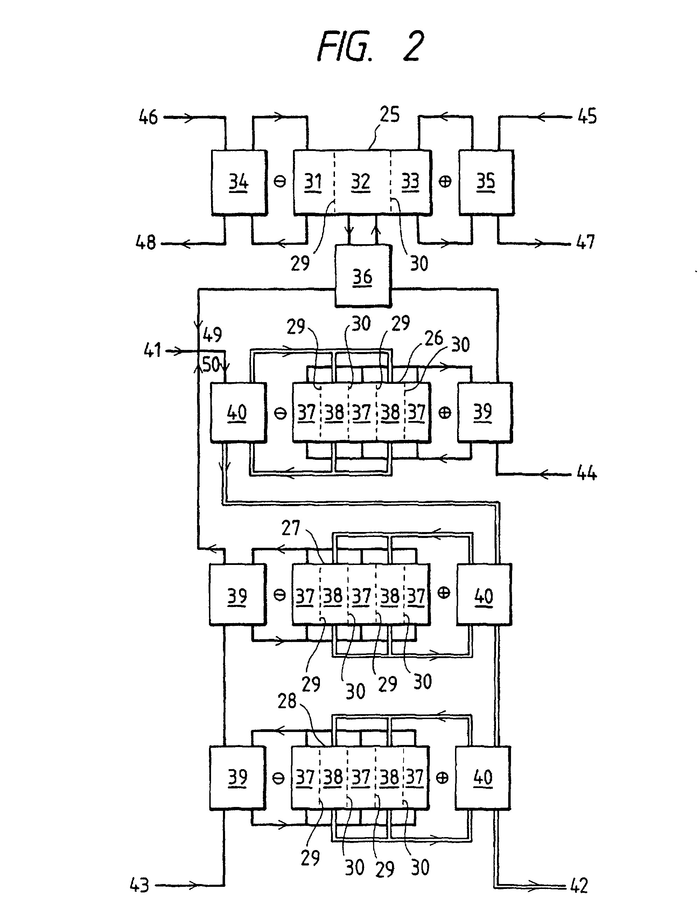

An example of the compositions of apparatus for treating waste water containing neutral salts comprising monovalent ions in accordance with a preferable embodiment of the present invention is shown in FIG. 1. In FIG. 2, the numeral 25 indicates an electrolytic dialysis cell, 26 is a prepositive electrodialysis cell, 27 is a main electrodialysis cell at the first stage of the main electrodialysis cells combined in series, 28 is the main electrodialysis cell at the last stage (the main electrodialysis cells at intermediate stages are omitted), 29 is a cation exchange membrane, 30 is an anion exchange membrane, 31 is a cathode compartment, 32 is a central compartment, 33 is an anode compartment, 34 is a catholyte circulating tank, 35 is an anolyte circulating tank, 36 is a feed stream circulating tank, 37 is a concentrated stream compartment, 38 is a diluted stream compartment, 39 is a concentrated stream circulating tank, 40 is a diluted stream circulating tank, 41 is feed stream, 42 is treated stream, 43 and 44 are displacement stream, 45 and 46 are absorbing stream, 47 is recovered base, 48 is recovered acid, 49 is the returning stream from the feed stream circulating tank of the electrolytic dialysis cell, and 50 is returning stream from the concentrated stream circulating tank in the main electrodialysis cells combined in series.

Transfer of liquid in the process for treating waste water is performed batchwise or continuouswise. That is, operation of the electrodialysis cell or the electrolytic dialysis cell can be repeated batchwise until the ion concentration in the diluted stream, the concentrated stream, recovered acid, or recovered base reaches at a designated level by supplying feeding stream to the diluted stream circulating tank 40 of the electrodialysis cell, or supplying the waste water to be treated or the stream received from the previous stage of the feed stream circulating tank 36. However, in the above case, the concentrated stream 37 in the electrodialysis cell, or the stream entering into the cathode compartment 31 and the anode compartment 33 must have electric conductivity. Therefore, it is necessary to use an aqueous solution of salt, acid, or base with an adequate concentration except a case when the concentrated stream in the main electrodialysis cell is supplied, and to control continuously to vary the voltage in order to maintain an appropriate electric current during the operation.

Otherwise, a continuous operation with the same treating capacity as the above batch process is possible, wherein feeding stream is accepted continuously from the waste water to be treated or the previous stage with keeping concentration of stream in the diluted compartment and the concentrated compartment of the respective main electrodialysis cells, or concentration of stream in the central compartment and the electrode compartments of the electrolytic dialysis cell, with a designated concentration at the exit, and the quantity of stream equal to a sum or a difference of the quantity of supplied stream and permeated stream through the ion exchange membranes is continuously taken out from the tank for the circulating stream and transferred to the processing step at the next stage. In the above case, the voltage must be controlled only to keep a constant value in order to keep the electric current constant during the operation because the electric conductivity in the electrolytic dialysis cell is always constant. Accordingly, the above continuous operation transferring the liquid continuously is more preferable in comparison with the batch process.

The concentrated stream which transferred through the main electrodialysis cells combined in series and the stream in the central compartment of the electrolytic dialysis cell are mixed with the waste water to be treated, and supplied to the prepositive electrodialysis cell. All of the above stream are released to the environment as the treated waste water.

Acid and base are recovered with an adequate concentration depending on the quantity of absorbing streams. As concentration of salt in the concentrated stream in the prepositive electrodialysis cell, which is the feed stream to the electrolytic dialysis cell, can be increased higher than the salt concentration in the waste water to be treated, it is easy to increase concentration of the recovered acid and base to a high concentration.

Notwithstanding the above composition, the present embodiment can be combined with a method for recovering acid and base, wherein the electrolytic dialysis cell comprises two compartments, a cathode compartment and an anode compartment having an anion exchange membrane as a separating membrane, and acid is generated and recovered in the anode compartment and base is generated and recovered in the cathode compartment by supplying waste water containing neutral salts comprising monovalent ions to the cathode compartment and electrolyzing the neutral salt. In the above method, composition of the electrolytic dialysis cell is simple, and the method is easily applicable to a case when generating base is ammonium hydroxide which is easily separated and recovered from the stream in the cathode compartment containing neutral salts by a method such as distillation method.

In the present embodiment, 6 $m^3$ of waste water containing ammonium nitrate by 0.5 g-mol/liter was treated in a day, and concentration of the ammonium nitrate in the waste water released to the environment was decreased at most 0.4 mg-mol/liter. The waste water to be treated contained sulfate ions by 6 mg-mol/liter and magnesium ions by 0.15 mg-mol/liter.

The prepositive electrodialysis cell 26 and each of the main electrodialysis cells combined in series 27, 28 had a capacity to decrease concentration of ammonium nitrate to 1/6, respectively. The three main electrodialysis cells were combined in series and transport of all the liquid was performed continuously. The quantity of replacing stream in the condensed compartment of the prepositive electrodialysis cell 36 and the quantity of replacing stream in the concentrated stream compartment of the main electrodialysis cells combined in series were equal to the sum or the difference of the quantity of the stream supplied from outside and the stream permeated through the ion exchange membranes, each quantity was respectively 1.5 $m^3$/day.

All of the electrodialysis cells 26, 27, 28 were composed of monovalent cation selectively permeable ion exchange membranes and monovalent anion selectively permeable ion exchange membranes.

The quantity of ammonium nitrate to be processed and removed in a day was 4500 g-mol/day including the quantity of circulating treatment of feed stream in the central compartment of the electrolytic dialysis cell and the final concentrated stream in the electrodialysis cell. The prepositive electrodialysis cell 26 must perform electrodialysis of 3750 g-mol/day, which was equal to 5/6 of the total treating amount. Therefore, necessary quantity of electricity was 5357 Faraday taking the current efficiency as 70 %, a filter press type stack of 20 pairs of ion exchange membranes, each of the membranes had a surface area of 0.2 $m^2$ with voltage of 37 V, was formed with 1 mm interval between each of the membranes, and the treatment was performed by loading 300 amperes electric current to the stack at 25 °C. Concentration in the diluted stream was 83.3 mg-mol/liter, and concentration in the concentrated stream was 2.5 g-mol/liter.

The main electrodialysis cell 27 at the first stage must perform electrodialysis of 625 g-mol/day. Accordingly, necessary quantity of electricity was 1250 Faraday taking the current efficiency as 50 %, a filter press type stack of 18 pairs of ion exchange membranes, each of the membranes had a surface area of 0.2 $m^2$ with voltage of 42 V, was formed with 1 mm interval between each of the membranes, and the treatment was performed by loading 78 amperes electric current to the stack at 25 °C. Concentration in the diluted stream was 13.9 mg-mol/liter, and concentration in the concentrated stream was 498 mg-mol/liter.

The main electrodialysis cell 27 at the second stage must perform electrodialysis of 104.2 g-mol/day. Accordingly, necessary quantity of electricity was 261 Faraday taking the current efficiency as 40 %, a filter press type stack of 15 pairs of ion exchange membranes, each of the membranes had a surface area of 0.2 $m^2$ with voltage of 50 V, was formed with 1 mm interval between each of the membranes, and the treatment was performed by loading 20 amperes electric current to the stack at 25 °C. Concentration in the diluted stream was 2.3 mg-mol/liter, and concentration in the concentrated stream was 83.3 mg-mol/liter.

The main electrodialysis cell 28 at the third stage (final stage) must perform electrodialysis of 17.3 g-mol/day. Accordingly, necessary quantity of electricity was 49 Faraday taking the current efficiency as 35 %, a filter press type stack of 11 pairs of ion exchange membranes, each of the membranes had a surface area of 0.2 $m^2$ with voltage of 50 V, was formed with 1 mm interval between each of the membranes, and the treatment was performed by loading 5 amperes electric current to the stack at 25 °C. Concentration in the diluted stream was 0.4 mg-mol/liter, and concentration in the concentrated stream was 13.9 mg-mol/liter.

The concentrated stream contacting to the anode or the cathode is circulated from a common circulating tank for the concentrated stream, respectively. Hydrogen ion concentration (pH) in the aqueous solution of ammonium nitrate was 4.8 irrelevant to the concentration of the ammonium nitrate, and hydrogen ion concentration in the catholyte did not reach to 12 which is the limit of hydrogen ion concentration for precipitating magnesium hydroxide.

The concentration of ammonium nitrate in the treated waste water was 0.4 mg-mol/liter, and a trace of sulfate ions and magnesium ions were contained. On the other hand, the electrolytic dialysis cell 25 was supplied with ammonium nitrate of 3750 g-mol/day for dialyzing 3000 g-mol/day of ammonium nitrate to nitric acid and ammonium. Accordingly, necessary quantity of electricity was 4286 Faraday taking the current efficiency as 70 %, a stack of 17 pairs of an ion exchange membrane having a surface area of 0.2 $m^2$ with current density of 1500 $A/m^2$ and an electrode was formed with 10 mm interval between each of the membrane and the electrode, and the treatment was performed by loading 300 amperes electric current by each cell voltage of 5.4 V to the stack at 25 °C. The quantity of absorbing stream for nitric acid was 1 $m^3$/day and concentration of the nitric acid was 3 g-mol/liter. The quantity of absorbing stream for ammonium hydroxide, which had always sulfate ion by a concentration of 0.3 g-mol/liter in order to give an electric conductivity equal to or more than the electroconductivity of the stream in the central compartment, was 1 $m^3$/day and the concentration of the ammonium hydroxide in the absorbing stream was 3 g-mol/liter. The concentration of the ammonium nitrate in the stream at the exit of the central compartment was 0.5 g-mol/liter.

The concentration of sulfate ion in the recovered nitric acid was at most 0.4 mg-mol/liter, and the mole ratio of the sulfate ion to the nitrate ion in the waste water to be treated was 1.2 %. While, the mole ratio of the sulfate ion to the nitrate ion in the recovered nitric acid was 0.013 %. Further, the quantity of magnesium in the stream supplied to the central compartment of the electrolytic dialysis cell 25 was reduced to 10 % in comparison with the quantity of magnesium in the waste water to be treated.

In accordance with the method relating to the present invention, 6 $m^3$ of the waste water containing ammonium nitrate by 0.5 g-mol/liter was treated. As the result, the consumed electric power for the electrolytic dialysis and the electrodialysis was 1014 kWH, and the consumed electric power for removing 1 kg of ammonium nitrate and recovering ammonium hydroxide and nitric acid was 4.2 kWH. The electrolytic dialysis cell 25 for recovering the ammonium hydroxide and the nitric acid consumed 65.2 % of total consumed electric power, the prepositive electrodialysis cell 26 consumed 26.4 %, and the three main electrodialysis cells combined in series, 27, 28 consumed 8.4 %, respectively.

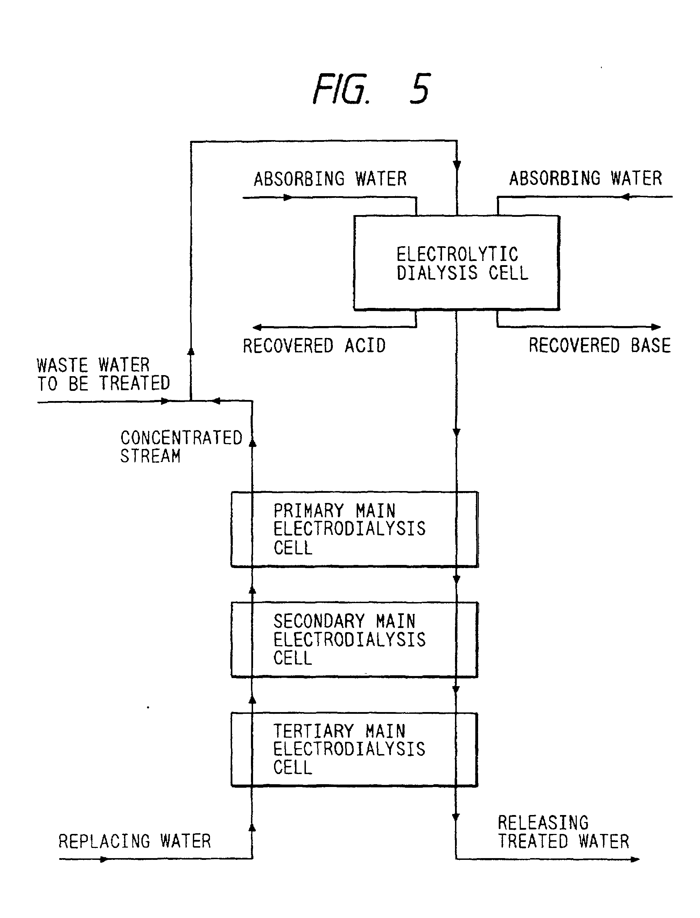

In order to confirm the advantage of the present invention, the present embodiment was compared with the prior art wherein the electrolytic dialysis cell and the electrodialysis cells are simply combined. A composition of the above prior art wherein the electrolytic dialysis cell and the electrodialysis cells are simply combined is shown in FIG. 5.

Referring to FIG. 5, a typical difference of the prior art from the operation shown in FIG. 4 of the present embodiment shown in FIG. 2 is that the waste water to be treated (including returned stream from the concentrated stream in the electrodialysis cells) is directly supplied to the feed stream circulating tank in the central compartment of the electrolytic dialysis cell, the diluted stream having a reduced salt concentration is delivered from the central compartment of the electrolytic dialysis cell, subsequently the diluted stream is transferred and treated through the circulating tanks for the diluted stream of the electrodialysis cells combined in series, and finally the diluted stream is released outside.

The same waste water as the embodiment shown in FIG. 2 was treated by 6 $m^3$/day to make the concentration of ammonium nitrate in the waste water to be released to environment equal to or less than 0.4 mg-mol/liter.

All of the liquid transfers were performed continuously, because the concentration of the ammonium nitrate was regarded as to be decreased to 1/6 at the electrolytic dialysis cell and each of the three main electrodialysis cells combined in series, respectively. In the present process, the replacing stream is supplied only to the concentrated stream compartment of the third electrodialysis cell, the quantity of the replacing stream was determined as 1.2 $m^3$/day so that the concentration of the ammonium nitrate in the concentrated stream finally became 0.5 g-mol/liter. As the result, concentration of ammonium nitrate in the stream flowing through the treating process was 0.5 g-mol/liter, and the quantity of the liquid was 7.2 $m^3$.

The electrolytic dialysis cell and all of the electrodialysis cells were composed of monovalent cation selectively permeable ion exchange membranes and monovalent anion selectively permeable ion exchange membranes.

The quantity of ammonium nitrate to be processed and removed in a day was 3600 g-mol/day including the quantity of circulating treatment stream. The electrolytic dialysis cell performed electrolytic dialysis of 3000 g-mol/day, which was equal to 5/6 of the total treating amount, to generate nitric acid and ammonium hydroxide. Therefore, necessary quantity of electricity was 4286 Faraday taking the current efficiency as 70 %. The treatment was performed with a stack of 17 pairs of an ion exchange membrane and an electrode, each of the ion exchange membrane had a surface area of 0.2 m$^2$ and current density of 1500 A/m$^2$, formed with 10 mm interval between each of the membrane and the electrode by loading 300 amperes electric current to each of cells at 25 °C. The quantity of absorbing water for nitric acid was 1 m$^3$/day and concentration of the nitric acid was 3 g-mol/liter. The quantity of absorbing water for ammonium hydroxide, which had always sulfate ion by a concentration of 0.05 g-mol/liter in order to give an electric conductivity equal to or more than the electric conductivity of the stream in the central compartment, was 1 m$^3$/day and the concentration of the ammonium hydroxide in the absorbing water was 3 g-mol/liter. The concentration of the ammonium nitrate in the stream at the exit of the central compartment was 0.5 g-mol/liter. The concentration of the ammonium nitrate in the stream at the exit of the central compartment was 83.3 mg-mol/liter.

The main electrodialysis cell at the first stage in FIG. 5 must perform electrodialysis of 500 g-mol/day. Accordingly, necessary quantity of electricity was 1000 Faraday taking the current efficiency as 50 %, a filter press type stack of 15 pairs of ion exchange membranes, each of the membranes had a surface area of 0.2 m$^2$ with voltage of 35 V, was formed with 1 mm interval between each of the membranes, and the treatment was performed by loading 78 amperes electric current to the stack at 25 °C. Concentration in the diluted stream was 13.9 mg-mol/liter, and concentration in the concentrated stream was 498 mg-mol/liter.

The main electrodialysis cell at the second stage in FIG. 5 must perform electrodialysis of 83.4 g-mol/day. Accordingly, necessary quantity of electricity was 209 Faraday taking the current efficiency as 40 %, a filter press type stack of 12 pairs of ion exchange membranes, each of the membranes had a surface area of 0.2 m$^2$ with voltage of 40 V, was formed with 1 mm interval between each of the membranes, and the treatment was performed by loading 20 amperes electric current to the stack at 25 °C. Concentration in the diluted stream was 2.3 mg-mol/liter, and concentration in the concentrated stream was 83.3 mg-mol/liter.

The main electrodialysis cell at the third stage (final stage) in FIG. 5 must perform electrodialysis of 13.8 g-mol/day. Accordingly, necessary quantity of electricity was 39 Faraday taking the current efficiency as 35 %, a filter press type stack of 9 pairs of ion exchange membranes, each of the membranes had a surface area of 0.2 m$^2$ with voltage of 39 V, was formed with 1 mm interval between each of the membranes, and the treatment was performed by loading 5 amperes electric current to the stack at 25 °C. Concentration in the diluted stream was 0.4 mg-mol/liter, and concentration in the concentrated stream was 13.9 mg-mol/liter.

The concentration of the ammonium nitrate in the treated waste water was 0.4 mg-mol/liter. Although a trace of sulfate ion and magnesium ion were contained in the waste water, there was no substantial difference from the embodiment shown in FIG. 2.

On the contrary, the concentration of sulfate ion in the recovered nitric acid was 4.7 mg-mol/liter. And the mole ratio of the sulfate ion to the nitrate ion in the waste water to be treated was 1.2 %, while, the mole ratio of the sulfate ion to the nitrate ion in the recovered nitric acid was 0.16 %, which was approximately 12 times in comparison with the embodiment shown in FIG. 2. Further, the quantity of magnesium in the stream supplied to the central compartment of the electrolytic dialysis cell in FIG. 5 was approximately 2 times in comparison with that in the embodiment shown in FIG. 2.

In accordance with the method relating to the comparative example shown in FIG. 5, 6 m$^3$ of the waste water containing ammonium nitrate by 0.5 g-mol/liter was treated. As the result, the consumed electric power for the electrolytic dialysis and the electrodialysis was 2357 kWH, and the consumed electric power for removing 1 kg of ammonium nitrate and recovering ammonium hydroxide and nitric acid was 9.8 kWH.

In the composition shown in FIG. 5, the reason for consuming a large quantity of electricity notwithstanding no prepositive electrodialysis cell is used in comparison with the embodiment shown in FIG. 2 is that a high voltage is required because the concentration of ammonium nitrate in the stream in the central compartment of the electrolytic dialysis cell is low, and accordingly, the specific electric resistivity of the stream is high. The electrolytic dialysis cell for recovering nitric acid and ammonium hydroxide consumed 96 % of the total consuming electric power, and the three main electrodialysis cells combined in series for removing ammonium nitrate from the waste water consumed only 4 % of the total consuming electric power.

A combination of the electrolytic dialysis and the electrodialysis enables to remove neutral salt comprising monovalent ions contained in waste water down to a low concentration. In accordance with the present invention, concentration of sulfuric acid as an impurity in the recovered nitric acid can be reduced to 1/12, concentration of magnesium as an impurity in the recovered base can be reduced to 1/2, and a possibility of causing failure in operation of the electrolytic dialysis cell by precipitating magnesium hydroxide in the catholyte during the operation can be reduced.

Further, in accordance with the present invention, necessary consuming electric power especially for recovering acid and base can be reduced significantly in comparison with a simple combination of prior art. For instance, the consuming power per unit treating amount can be reduced to about 1/2. The above advantage is based on an effect which is realized by supplying the feed stream concentrated by the prepositive electrodialysis cell to the electrolytic dialysis cell. The above advantage can be obtained in a case recovering nitric acid and sodium hydroxide by electrodialysis of sodium nitrate as well.

**Claims**

1. A method of treating waste water containing neutral salts comprising monovalent ions, comprising the steps of:-

(i) supplying a feed stream, including a stream (41) of the waste water, to a precursor electrodialysis cell (26),
(ii) separating the neutral salts from the waste water by electrodialysis in the precursor electrodialysis cell (26) and obtaining from the precursor electrodialysis cell a concentrated stream and a diluted stream,
(iii) supplying said concentrated stream from the precursor electrodialysis cell (26) to an electrolytic dialysis cell (25) and separating the neutral salts into acids and bases in the electrolytic dialysis cell (25), and
(iv) supplying said diluted stream from the precursor electrodialysis cell (26) to at least two main electrodialysis cells (27,28) which are combined in series and comprise a first stage cell (27) and a final stage cell (28), and reducing the concentration of neutral salts in said diluted stream in said main electrodialysis cells (27,28).

2. A method according to claim 1, including the steps of:-

passing a second concentrated stream obtained in said final stage cell (28) countercurrently to said diluted stream to concentrated stream compartments (39) of said main electrodialysis cells (27,28), and
merging said second concentrated stream, emerging from said first stage cell (27) as a stream (50), with said stream (41) of the waste water being fed to said precursor electrodialysis cell (26).

3. A method according to claim 1 or 2 wherein said precursor electrodialysis cell (26) has diluted stream compartments (38) and concentrated stream compartments (37) partitioned by at least one cation exchange membrane (29) and at least one anion exchange membrane (30) with at least one of said ion exchange membranes being a membrane which transfers monovalent ions selectively and preferentially, and said waste water to be treated is supplied to said diluted stream compartment (38), said neutral salts being depleted in said diluted stream compartments (38) and concentrated in said concentrated stream compartments (37) by electrodialysis.

4. A method as claimed in claim 1, wherein said electrolytic dialysis cell (25) has an anode compartment (33), a central compartment (32) and a cathode compartment (31) partitioned by an anion exchange membrane (30) and a cation exchange membrane (29) at least one of the membranes being a membrane which transfers monovalent ions selectively and preferentially, and said concentrated stream from said precursor cell (26) containing said neutral salts comprising monovalent ions is supplied to said central compartment (32),
the acid and the base composing said salts are recovered by electrolytic dialysis of said salt into acids of monovalent anions and bases of monovalent cations by generating said acids in said anode compartment (33) and said bases in said cathode compartment (31).

5. A method as claimed in claim 4, wherein
said cation waste water comprises ammonium ions as monovalent cations, and
a strong acid or base electrolyte is added to the stream in said cathode compartment (31) so as to provide electric conductivity when ammonium hydroxide is generated in the cathode compartment (31) for recovering ammonium hydroxide from the stream in the cathode compartment.

6. A method as claimed in claim 1, wherein
each of said precursor and main electrodialysis cells has diluted stream compartments (38) and concentrated stream compartments (37) partitioned by cation exchange membranes and anion exchange membranes at least one of which is a membrane which transfers monovalent ions selectively and preferentially, and the diluted streams obtained in said precursor electrodialysis cell and the or each said main electrodialysis cells, other than the final stage cell, is supplied to the diluted stream compartments (38) of the next electrodialysis cell in the sequence, and
said neutral salts are diluted in said diluted stream compartments and concentrated in said concentrated stream compartments by electrodialysis.

7. A method as claimed in claim 4, wherein
the stream exiting from the central compartment (32) in said electrolytic dialysis cell (25) is merged with said stream (41) of said waste water fed to said precursor electrodialysis cell (26).

**8.** A method as claimed in claim 2, wherein

said second concentrated stream from the final stage cell (28) is processed to reduce its concentration of ions other than the monovalent ions to a value at least similar to the concentration in the waste water to be treated, before the merging of said second concentrated stream with said waste water.

**9.** A method as claimed in claim 1, wherein

a second concentrated stream passes countercurrently to said diluted stream through said main electrodialysis cells (27,28), and

the concentration of the salts in the diluted stream in each stage of said main electrodialysis cells decreases by approximately a constant rate, and

the concentration of the salts in the concentrated stream in each stage of said main electrodialysis cells increases by approximately a constant rate.

**10.** A method as claimed in claim 9, wherein

the concentration of the salts in said diluted stream in each stage of said main electrodialysis cells, decreases by a factor in a range from 4 to 8, and

the concentration of the salts in said concentrated stream in each stage of said main electrodialysis cells increases to a value in a range from 16 times to 64 times of the concentration of the salt in said diluted stream.

**11.** A method as claimed in claim 6, wherein the method is performed continuously and

the diluted stream contained in the plural diluted stream compartments of said precursor electrodialysis cell (26) and said main electrodialysis cells (27,28) and the concentrated stream contained in the plural concentrated stream compartments of said precursor electrodialysis cell (26) and said main electrodialysis cells (27,28) are passed with constant flow rates, and

a treated stream (42) whose amount is equal to the sum or the difference of the quantity of the stream being supplied continuously from outside and the quantity of the stream transferred through the ion exchange membranes is discharged continuously to the outside.

**12.** A method as claimed in claim 11, wherein

said concentrated stream in said precursor electrodialysis cell (26) and said main electrodialysis cells (27,28) circulates by passing through the anode compartments first and subsequently passing through the cathode compartments.

**13.** A method as claimed in claim 4 or 5, wherein the method is performed continuously and

the streams in the central compartment, the anode compartment, and the cathode compartment in said electrolytic dialysis cell, respectively, having a constant concentration in each of the central compartment, the anode compartment and the cathode compartment, are circulated respectively with a constant flow rate, and

a treated stream whose amount is equal to the sum or the difference of the quantity of the stream being supplied continuously from outside and the quantity of the stream transferred through the ion exchange membranes is discharged continuously to outside.

**14.** A method as claimed in claim 6, wherein the method is performed batchwise and

the diluted stream and the concentrated stream which are supplied batchwise to the plural diluted stream compartments and plural concentrated stream compartments in said precursor electrodialysis cell and said main electrodialysis cells, respectively, are passed with a constant rate, and

the electrodialysis is continued until the concentration in each stream reaches a designated value.

**15.** A method as claimed in claim 4 or 5, wherein

the diluted stream and the concentrated stream which are supplied batchwise to the central compartment, the anode compartment, and the cathode compartment in said electrolytic dialysis cell, are respectively circulated with a constant rate, and

the electrodialysis is continued until the concentration in each stream reaches a designated value.

**Patentansprüche**

**1.** Verfahren zum Behandeln von Abwasser, das neutrale Salze mit einwertigen Ionen enthält, mit folgenden Schritten:

EP 0 687 652 B1

(i) Zuführen eines Versorgungsstroms, einschließlich eines Abwasserstroms (41), in eine Vorlauf-Elektrodialysezelle (26),

(ii) Abscheiden der neutralen Salze aus dem Abwasser mittels Elektrolyse in der Vorlauf-Elektrodialysezelle (26) und Erhalten eines konzentrierten und eines verdünnten Stroms aus der Vorlauf-Elektrodialysezelle,

(iii) Zuführen des konzentrierten Stroms aus der Vorlauf-Elektrodialysezelle (26) in eine elektrolytische Dialysezelle (25) und Aufteilen der neutralen Salze in Säuren und Basen in der elektrolytischen Dialysezelle (25), und

(iv) Zuführen des verdünnten Stromes aus der Vorlauf-Elektrodialysezelle (26) in mindestens zwei seriell kombinierte Hauptelektrodialysezellen (27, 28), die eine Vorstufenzelle (27) und eine Endstufenzelle (28) umfassen, und Verringern der Konzentration der neutralen Salze im verdünnten Strom in den Hauptelektrodialysezellen (27, 28).

2. Verfahren nach Anspruch 1 mit den Schritten:

Leiten eines zweiten, in der Endstufenzelle (28) erhaltenen, konzentrierten Stroms in Gegenstromrichtung zum verdünnten Strom in Kammern (39) für konzentrierten Strom der Hauptelektrodialysezellen (27, 28) und Zusammenführen des zweiten, als Strom (50) aus der Vorstufenzelle (27) austretenden Stromes mit dem der Vorlauf-Elektrodialysezelle (26) zugeführten Abwasserstrom (41).

3. Verfahren nach Anspruch 1 oder 2, wobei die Vorlauf-Elektrodialysezelle (26) jeweils Kammern (38, 37) für verdünnten und konzentrierten Strom aufweist, die durch mindestens eine Kationenaustauschmembran (29) und mindestens eine Anionenaustauschmembran (30) getrennt sind, wobei mindestens eine davon gezielt und vorzugsweise einwertige Ionen überträgt, und das zu behandelnde Abwasser der Kammer (38) für verdünnten Strom zugeführt wird, wobei die neutralen Salze mittels Elektrolyse in den Kammern (38) für verdünnten Strom entzogen und in den Kammern (37) für konzentrierten Strom konzentriert werden.

4. Verfahren nach Anspruch 1, wobei die elektrolytische Dialysezelle (25) eine Anodenkammer (33), eine mittlere Kammer (32) und eine Kathodenkammer (31) aufweist, die durch eine Anionenaustauschmembran (30) und eine Kationenaustauschmembran (29) voneinander getrennt sind, wobei mindestens eine davon gezielt und vorzugsweise einwertige Ionen überträgt, und der konzentrierte Strom aus der Vorlaufzelle (26), der die neutralen Salze mit einwertigen Ionen enthält, der mittleren Kammer zugeführt wird, wobei die salzbildende Säure und Base durch elektrolytische Dialyse der Salze in Säuren einwertiger Anionen und Basen einwertiger Kationen zurückgewonnen werden, indem die Säuren in der Anodenkammer (33) und die Basen in der Kathodenkammer (31) erzeugt werden.

5. Verfahren nach Anspruch 4, wobei

das Kationenabwasser Ammoniumionen als einwertige Kationen enthält, und

ein stark saurer oder basischer Elektrolyt dem Strom in der Kathodenkammer (31) zugegeben wird, um die elektrische Leitfähigkeit zu gewährleisten, wenn Ammoniumhydroxid in der Kathodenkammer (31) aus dem Strom in der Kathodenkammer (31) zurückgewonnen wird.

6. Verfahren nach Anspruch 1, wobei

jede der Vorlauf- und Hauptelektrodialysezellen jeweils Kammern (38, 37) für verdünnten und konzentrierten Strom aufweist, die durch Kationen- und Anionenaustauschmembranen voneinander getrennt sind, wobei mindestens eine davon gezielt und vorzugsweise einwertige Ionen überträgt, und die in der Vorlauf-Elektrodialysezelle und der oder jeder der Haupt-Elektrodialysezellen, die keine Endstufenzelle sind, erhaltenen verdünnten Ströme den Kammern (38) für verdünnten Strom der nächsten in Folge liegenden Elektrodialysezelle zugeführt werden, und

die neutralen Salze mittels Elektrodialyse in den Kammern für verdünnten Strom entzogen und in denen für konzentrierten Strom konzentriert werden.

7. Verfahren nach Anspruch 4, wobei der aus der mittleren Kammer (32) der elektrolytischen Dialysezelle (25) austretende Strom mit dem der Vorlaufelektrolysezelle (26) zugeführten Abwasserstrom (41) zusammengeführt wird.

8. Verfahren nach Anspruch 2, wobei der zweite konzentrierte Strom aus der Endstufenzelle (28) behandelt wird, bevor er mit dem Abwasser zusammengeführt wird, um die Konzentration von Ionen, die nicht einwertig sind, auf einen Wert zu reduzieren, der mindestens ähnlich der Konzentration im zu behandelnden Abwasser ist.

12

9. Verfahren nach Anspruch 1, wobei

ein zweiter konzentrierter Strom in Gegenstromrichtung zum verdünnten Strom durch die Hauptelektrodialysezellen (27, 28) geführt wird,

die Konzentration der Salze im verdünnten Strom in jeder Stufe der Hauptelektrodialysezellen um eine etwa konstante Rate abnimmt, und

die Konzentration der Salze im konzentrierten Strom in jeder Stufe der Hauptelektrodialysezellen um eine etwa konstante Rate zunimmt.

10. Verfahren nach Anspruch 9, wobei

die Konzentration der Salze im verdünnten Strom in jeder Stufe der Hauptelektrodialysezellen um einen Faktor im Bereich von 4 bis 8 abnimmt, und

die Konzentration der Salze im konzentrierten Strom in jeder Stufe der Hauptelektrodialysezellen auf einen Wert im Bereich des 16- bis 24-fachen der Konzentration des Salzes im verdünnten Strom ansteigt.

11. Verfahren nach Anspruch 6, wobei das Verfahren kontinuierlich durchgeführt wird, und

der verdünnte Strom, der in den Kammern für verdünnten Strom der Vorlauf-Elektrodialysezelle (26) und der Hauptelektrodialysezellen (27, 28) enthalten ist, und der konzentrierte Strom, der in den Kammern für konzentrierten Strom der Vorlauf-Elektrodialysezelle (26) und der Hauptelektrodialysezellen (27, 28) enthalten ist, mit konstanten Flußraten geleitet werden, und

ein behandelter Strom (42), dessen Umfang der Summe oder der Differenz der Menge des kontinuierlich von außen zugeführten Stroms und der Menge des durch die Ionenaustauschmembranen übertragenen Stroms entspricht, kontinuierlich nach außen abgegeben wird.

12. Verfahren nach Anspruch 11, wobei der konzentrierte Strom in der Vorlauf-Elektrodialysezelle (26) und den Hauptelektrodialysezellen (27, 28) zirkuliert, indem er erst die Anodenkammern und anschließend die Kathodenkammern passiert.

13. Verfahren nach Anspruch 4 oder 5, wobei das Verfahren kontinuierlich durchgeführt wird, und

die Ströme in der mittleren Kammer, in der Anodenkammer und in der Kathodenkammer der elektrolytischen Dialysezelle jeweils eine konstante Konzentration aufweisen und mit einer konstanten Durchflußrate zirkulieren, und

ein behandelter Strom, dessen Umfang der Summe oder der Differenz der Menge des kontinuierlich von außen zugeführten Stroms und der Menge des kontinuierlich durch die Ionenaustauschmembranen nach außen abgegebenen Stroms entspricht, kontinuierlich nach außen abgegeben wird.

14. Verfahren nach Anspruch 6, wobei das Verfahren chargenweise durchgeführt wird, und

der verdünnte und der konzentrierte Strom, die jeweils chargenweise den Kammern für verdünnten und den Kammern für konzentrierten Strom in der Vorlauf-Elektrodialysezelle und den Hauptelektrodialysezellen zugeführt werden, mit einer konstanten Rate geleitet werden, und

die Elektrodialyse fortgesetzt wird, bis die Konzentration in jedem Strom einen bestimmten Wert erreicht.

15. Verfahren nach Anspruch 4 oder 5, wobei

der verdünnte und der konzentrierte Strom, die jeweils chargenweise der mittleren Kammer, der Anodenkammer und der Kathodenkammer in der elektrolytischen Dialysezelle zugeführt werden, jeweils mit einer konstanten Rate zirkulieren, und

die Elektrodialyse fortgesetzt wird, bis die Konzentration in jedem der Ströme einen bestimmten Wert erreicht.

**Revendications**

1. Procédé de traitement d'eaux usées contenant des sels neutres comportant des ions monovalents, comportant les étapes consistant à :

(i) délivrer un flux d'alimentation, incluant un flux (41) de l'eau usée, dans une cellule d'électrodialyse précurseur (26),

(ii) séparer les sels neutres de l'eau usée par électrodialyse dans la cellule d'électrodialyse précurseur (26) et obtenir à partir de la cellule d'électrodialyse précurseur un flux concentré et un flux dilué,

(iii) délivrer ledit flux concentré depuis la cellule d'électrodialyse précurseur (26) dans une cellule de dialyse électrolytique (25) et séparer les sels neutres en acides et bases dans la cellule de dialyse électrolytique (25), et (iv) délivrer ledit flux dilué depuis la cellule d'électrodialyse précurseur (26) dans au moins deux cellules d'électrodialyse principales (27, 28) qui sont combinées en série et comportent une cellule de premier étage (27) et une cellule d'étage final (28), et réduire la concentration des sels neutres dans ledit fluide dilué dans lesdites cellules d'électrodialyse principales (27, 28).

2. Procédé selon la revendication 1, comportant les étapes consistant à :

faire passer un second flux concentré obtenu dans ladite cellule d'étage final (28) à contre-courant dudit flux dilué dans des compartiments de flux concentré (39) desdites cellules d'électrodialyse principales (27, 28), et fusionner ledit second flux concentré, sortant de ladite cellule de premier étage (27) sous forme d'un flux (50), avec ledit flux (41) de l'eau usée qui est alimentée dans ladite cellule d'électrodialyse précurseur (26).

3. Procédé selon la revendication 1 ou 2, dans lequel ladite cellule d'électrodialyse précurseur (26) a des compartiments de flux dilué (38) et des compartiments de flux concentré (37) cloisonnés par au moins une membrane échangeuse de cations (29) et une membrane échangeuse d'anions (30), au moins une desdites membranes échangeuses d'ions étant une membrane qui transfère des ions monovalents de manière sélective et préférentielle, et ladite eau usée à traiter est délivrée dans ledit compartiment de flux dilué (38), lesdits sels neutres étant appauvris dans lesdits compartiments de flux dilué (38) et concentrés dans lesdits compartiments de flux concentré (37) par électrodialyse.

4. Procédé selon la revendication 1, dans lequel ladite cellule de dialyse électrolytique (25) a un compartiment anodique (33), un compartiment central (32) et un compartiment cathodique (31) cloisonnés par une membrane échangeuse d'anions (30) et une membrane échangeuse de cations (39), au moins une des membranes étant une membrane qui transfère des ions monovalents de manière sélective et préférentielle, et ledit flux concentré provenant de ladite cellule précurseur (26) contenant lesdits sels neutres comportant des ions monovalents est délivré dans ledit compartiment central (32),

l'acide et la base composant lesdits sels sont récupérés par dialyse électrolytique dudit sel en acides d'anions monovalents et bases de cations monovalents en générant lesdits acides dans ledit compartiment anodique (33) et lesdites bases dans ledit compartiment cathodique (31).

5. Procédé selon la revendication 4, dans lequel ladite eau usée cationique comporte des ions ammonium en tant que cations monovalents, et

un électrolyte acide ou basique fort est ajouté au fluide dans ledit compartiment cathodique (31) de manière à fournir une conductivité électrique lorsque l'hydroxyde d'ammonium est généré dans le compartiment cathodique (31) pour récupérer l'hydroxyde d'ammonium depuis le flux dans le compartiment cathodique.

6. Procédé selon la revendication 1, dans lequel

chacune desdites cellules d'électrodialyse précurseur et principales a des compartiments de flux dilué (38) et des compartiments de flux concentré (37) partitionnés par des membranes échangeuses de cations et des membranes échangeuses d'anions, au moins une étant une membrane qui transfère des ions monovalents de manière sélective et préférentielle, et les flux dilués obtenus dans ladite cellule d'électrodialyse précurseur et la cellule ou chaque cellule d'électrodialyse principale, autre que la cellule d'étage final, sont délivrés dans les compartiments de flux dilué (38) de la cellule d'électrodialyse suivante de la séquence, et

lesdits sels neutres sont dilués dans lesdits compartiments de flux dilué et concentrés dans lesdits compartiments de flux concentré par électrodialyse.

7. Procédé selon la revendication 4, dans lequel

le flux sortant du compartiment central (32) dans ladite cellule de dialyse électrolytique (25) est fusionné audit flux (41) de ladite eau usée alimentée dans ladite cellule d'électrodialyse précurseur (26).

8. Procédé selon la revendication 2, dans lequel

ledit second flux concentré provenant de la cellule d'étage final (28) est traité pour réduire sa concentration en ions autres que les ions monovalents à une valeur au moins similaire à la concentration dans l'eau usée à traiter, avant la fusion dudit second flux concentré avec ladite eau usée.

9. Procédé selon la revendication 1, dans lequel

un second flux concentré passe à contre-courant dudit flux dilué à travers lesdites cellules d'électrodialyse principales (27, 28), et

la concentration des sels dans le flux dilué dans chaque étage desdites cellules d'électrodialyse principales diminue d'une vitesse approximativement constante, et

la concentration des sels dans le flux concentré dans chaque étage desdites cellules d'électrodialyse principales augmente d'une vitesse approximativement constante.

10. Procédé selon la revendication 9, dans lequel

la concentration des sels dans ledit flux dilué dans chaque étage desdites cellules d'électrodialyse principales diminue d'un facteur situé dans une plage allant de 4 à 8, et

la concentration des sels dans ledit flux concentré dans chaque étage desdites cellules d'électrodialyse principales augmente jusqu'à une valeur située dans une plage allant de 16 fois à 64 fois la concentration du sel dans ledit flux dilué.

11. Procédé selon la revendication 6, dans lequel le procédé est mis en oeuvre en continu et

le flux dilué contenu dans les plusieurs compartiments de flux dilué de ladite cellule d'électrodialyse précurseur (26) et desdites cellules d'électrodialyse principales (27, 28) et le flux concentré contenu dans les plusieurs compartiments de flux concentré de ladite cellule d'électrodialyse précurseur (26) et desdites cellules d'électrodialyse principales (27, 28) sont passés à des débits constants, et

un flux traité (42) dont la quantité est égale à la somme ou à la différence de la quantité du flux qui est alimenté en continu depuis l'extérieur et de la quantité du flux transféré à travers les membranes échangeuses d'ions est déchargé en continu vers l'extérieur.

12. Procédé selon la revendication 11, dans lequel

ledit flux concentré dans ladite cellule d'électrodialyse précurseur (26) et lesdites cellules d'électrodialyse principales (27, 28) circule en passant tout d'abord à travers les compartiments anodiques et en passant par la suite à travers les compartiments cathodiques.

13. Procédé selon la revendication 4 ou 5, dans lequel le procédé est effectué en continu et

les flux dans le compartiment central, le compartiment anodique et le compartiment cathodique dans ladite cellule de dialyse électrolytique, respectivement, ayant une concentration constante dans chacun des compartiment central, compartiment anodique et compartiment cathodique, sont mis en circulation respectivement à un débit constant, et

un flux traité dont la quantité est égale à la somme ou à la différence de la quantité du flux qui est alimenté en continu depuis l'extérieur et de la quantité du flux transféré à travers les membranes échangeuses d'ions est déchargé en continu vers l'extérieur.

14. Procédé selon la revendication 6, dans lequel le procédé est mis en oeuvre en discontinu et

le flux dilué et le flux concentré qui sont alimentés en discontinu dans les plusieurs compartiments de flux dilué et les plusieurs compartiments de flux concentré de ladite cellule d'électrodialyse précurseur et desdites cellules d'électrodialyse principales, respectivement, sont passés à une vitesse constante, et

l'électrodialyse est poursuivie jusqu'à ce que la concentration dans chaque flux atteigne une valeur désignée.

15. Procédé selon la revendication 4 ou 5, dans lequel

le flux dilué et le flux concentré sont alimentés en discontinu dans le compartiment central, le compartiment anodique et le compartiment cathodique de ladite cellule de dialyse électrolytique, sont respectivement mis en circulation à une vitesse constante, et

l'électrodialyse est poursuivie jusqu'à ce que la concentration dans chaque flux atteigne une valeur désignée.

# FIG. 1

FEED STREAM

ABSORBING WATER          ABSORBING WATER

```
ELECTROLYTIC
DIALYSIS CELL
```

RECOVERED ACID                    RECOVERED BASE

WASTE WATER
TO BE TREATED

```
PREPOSITIVE
ELECTRODIALYSIS CELL
```

REPLACING
WATER

CONCENTRATED
STREAM

```
PRIMARY MAIN
ELECTRODIALYSIS
CELL
```

```
SECONDARY MAIN
ELECTRODIALYSIS
CELL
```

```
TERTIARY MAIN
ELECTRODIALYSIS
CELL
```

REPLACING WATER

RELEASING
TREATED WATER

16

# FIG. 2

## FIG. 3

## FIG. 4

# FIG. 5

ABSORBING WATER
ABSORBING WATER

ELECTROLYTIC
DIALYSIS CELL

RECOVERED ACID
RECOVERED BASE

WASTE WATER
TO BE TREATED

CONCENTRATED
STREAM

PRIMARY MAIN
ELECTRODIALYSIS
CELL

SECONDARY MAIN
ELECTRODIALYSIS
CELL

TERTIARY MAIN
ELECTRODIALYSIS
CELL

RELEASING
TREATED WATER

REPLACING WATER